# EUROPEAN PATENT APPLICATION

(11) **EP 4 753 087 A1**
(43) Date of publication of application: **03.06.2026**
(21) Application number: 25305277.3
(22) Date of filing: 28.02.2025
(51) Int. Cl.: H02B 1/20, H02G 5/02

(54) **BUSBAR SUPPORT APPARATUS AND POWER DISTRIBUTION CABINET**

(30) Priority: 28.11.2024 CN 202422922795 U
(71) Applicant: SCHNEIDER ELECTRIC INDUSTRIES SAS, 92500 Rueil-Malmaison (FR)
(72) Inventor: Zhang, Qinghong, Shanghai, 201203 (CN); Ding, Senmao, Shanghai, 201203 (CN)
(74) Representative: Manitz Finsterwald Patent- und Rechtsanwaltspartnerschaft mbB

(57) **Abstract**

Embodiments of the disclosure provide a busbar support apparatus and a power distribution cabinet. The busbar support apparatus includes a first support member and a second support member spaced apart. The adjacent sides of the first and second support members are respectively provided with a plurality of first grooves. The top and bottom of the first and second support members are respectively provided with a plurality of second grooves. The plurality of first grooves are respectively configured to fix a plurality of busbars. The plurality of second grooves are respectively configured to fix a plurality of inter-phase insulating separator plates. A plurality of outer insulating sleeves are arranged between the first and second support members and respectively correspond to the plurality of second grooves. A plurality of connecting assemblies respectively penetrate through the plurality of outer insulating sleeves and are coupled to the first and second support members.

## Description

### FIELD

Embodiments of the present disclosure generally relate to the field of electrical equipment, and in particular, to a busbar support apparatus and a power distribution cabinet.

### BACKGROUND

A power distribution cabinet, as an important constituent part in an electrical system, is widely applied in industrial, commercial and even household electrical fields. Inter-phase isolation can effectively prevent diffusion of an electrical failure in the cabinet, protect safety of equipment and personnel, and improve reliability and continuity of a power supply. In a practical application, with increasing requirements for electrical safety and system stability of the power distribution cabinet, the inter-phase isolation function gradually becomes a basic requirement of a low-voltage power distribution cabinet. In a conventional power distribution cabinet, in order to realize inter-phase isolation between busbars, it is necessary to rely on specifically developed insulating components, such as insulating grids with a certain specification and model. These insulating components are independently installed or installed in the power distribution cabinet by adopting an additional support structure, so that the application flexibility is poor, and there are problems such as large occupation space, high cost, and complex assembly.

### SUMMARY

An object of embodiments of the present disclosure is to provide a busbar support apparatus and a power distribution cabinet to at least partially solve the above problems and other potential problems.

In a first aspect of the present disclosure provides a busbar support apparatus. The busbar support apparatus includes a first support member and a second support member spaced apart from each other, wherein the adjacent sides of the first support member and the second support member are respectively provided with a plurality of first grooves, and the top and the bottom of the first support member and the second support member are respectively provided with a plurality of second grooves,wherein the plurality of first grooves are respectively configured to fix a plurality of busbars between the first support member and the second support member, and the plurality of second grooves are respectively configured to fix a plurality of inter-phase insulating separator plates between the busbar support apparatus and another busbar support apparatus; a plurality of outer insulating sleeves arranged between the first support member and the second support member and respectively corresponding to the plurality of second grooves; and a plurality of connecting assemblies respectively penetrating through the plurality of outer insulating sleeves and coupled to the first support member and the second support member.

In some embodiments, the top and the bottom of each outer insulating sleeve are respectively provided with a third groove, and the third groove at the top of the outer insulating sleeve corresponds to the respective second grooves at the top of the first support member and the top of the second support member, and the third groove at the bottom of the outer insulating sleeve corresponds to the respective second grooves at the bottom of the first support member and the second support member, so that each of the inter-phase insulating separator plates is detachably inserted into the respective second grooves and the respective third groove.

In some embodiments, the top and the bottom of each outer insulating sleeve are respectively provided with two ribs spaced apart to form the third groove.

In some embodiments, the adjacent sides of the first support member and the second support member are respectively provided with a plurality of limiting seats, and the plurality of limiting seats are respectively inserted into the plurality of outer insulating sleeves to limit the outer insulating sleeves.

In some embodiments, the busbar support apparatus further includes: a plurality of inner insulating sleeves respectively arranged within the plurality of outer insulating sleeves and respectively surrounding the plurality of connecting assemblies.

In some embodiments, the first support member and the second support member are respectively provided with a plurality of through holes, and each connecting assembly includes: a first screw member penetrating through the respective through hole of one of the first support member and the second support member and inserted into the respective outer insulating sleeve; a second screw member penetrating through the respective through hole of the other one of the first support member and the second support member; and a double-ended threaded sleeve arranged in the through hole corresponding to the second screw member and detachably coupled to the respective first screw member and second screw member, wherein the length of the first screw member is greater than the length of the second screw member.

In some embodiments, the opposite ends of the first support member and the second support member are provided with connecting portions for fixing the busbar support apparatus to a power distribution cabinet.

A second aspect of the present disclosure provides a power distribution cabinet. The power distribution cabinet includes a cabinet body; a plurality of busbar support apparatus according to the first aspect of the present disclosure, mounted within the cabinet body; a plurality of busbars respectively inserted into the plurality of first grooves of the first support member and the second support member; and a plurality of groups of inter-phase insulating separator plates, each group of inter-phase insulating separator plates including a plurality of inter-phase insulating separator plates, and each group of inter-phase insulating separator plates being detachably coupled to the plurality of second grooves on two adjacent busbar support apparatus.

In some embodiments, the cabinet body includes a first side support member and a second side support member arranged in parallel on both sides of the plurality of busbar support apparatus and detachably coupled to the plurality of busbar support apparatus.

In some embodiments, the first side support member and the second side support member are provided with a plurality of mating portions, connecting portions of the first support member and the second support member of the plurality of busbar support apparatus are detachably coupled to the plurality of mating portions, and the number of the plurality of mating portions is greater than the number of the plurality of busbar support apparatus.

In some embodiments, one of the connecting portion and the mating portion is a limiting groove, the other one of the connecting portion and the mating portion is a limiting protrusion inserted into the limiting groove.

In some embodiments, the mating portion is a structure formed by stamping and bending from the first side support member and the second side support member.

In the embodiments of the present disclosure, the busbar support apparatus includes a first support member, a second support member, a plurality of outer insulating sleeves, and a plurality of connecting assemblies. The first support member and the second support member are spaced apart from each other. The adjacent sides of the first support member and the second support member are respectively provided with a plurality of first grooves. The top and bottom of the first support member and the second support member are respectively provided with a plurality of second grooves. The plurality of first grooves are respectively configured to fix a plurality of busbars between the first support member and the second support member. The plurality of second grooves are respectively configured to fix a plurality of inter-phase insulating separator plates between the busbar support apparatus and another busbar support apparatus. The plurality of outer insulating sleeves are arranged between the first support member and the second support member and respectively correspond to the plurality of second grooves. The plurality of connecting assemblies respectively penetrate through the plurality of outer insulating sleeves and are coupled to the first support member and the second support member. With this arrangement, the busbar support apparatus not only can fix the plurality of busbars, but also can fix the plurality of inter-phase insulating separator plates. During use, without relying on specially developed insulating components, the inter-phase isolation function may be realized on the busbar support apparatus, so that the cost is controlled, the installation convenience is improved, and the space in the cabinet may be saved.

It should be understood that content described in the summary is not intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following detailed description taken in conjunction with the accompanying drawings. In the drawings, the same or similar reference numerals denote the same or similar elements, wherein:
FIG. 1 illustrates a perspective view of a busbar support apparatus according to an embodiment of the present disclosure;
FIG. 2 illustrates an exploded view of a busbar support apparatus according to an embodiment of the present disclosure;
FIG. 3 illustrates a cross-sectional view of a busbar support apparatus according to an embodiment of the present disclosure;
FIG. 4 illustrates a perspective view of a power distribution cabinet according to an embodiment of the present disclosure; and
FIG. 5 illustrates a perspective view of a first side support member, a second side support member, a busbar, and a busbar support apparatus according to an embodiment of the present disclosure.

Description of Reference Numerals:
100: busbar support apparatus;
10a: first support member; 10b: second support member; 11: first groove; 12: second groove; 13: limiting seat; 14: through hole; 15: connecting portion;
21: outer insulating sleeve; 210: third groove; 211: rib; 22: inner insulating sleeve;
30: connecting assembly; 31: first screw member; 32 second screw member; 33: double-ended threaded sleeve;
200: power distribution cabinet;
220: busbar;
230: inter-phase insulating separator plate;
240: cabinet body; 241: first side support member; 242: second side support member; 243: mating portion.

### DETAILED DESCRIPTION

Preferred embodiments of the present disclosure will be described in more detail below with reference to the accompanying drawings. Although preferred embodiments of the present disclosure are shown in the drawings, it should be understood that the present disclosure may be implemented in various forms and should not be limited by the embodiments set forth herein. Rather, these embodiments are provided to make the present disclosure more thorough and complete, and can fully convey the scope of the present disclosure to those skilled in the art.

As used herein, the term "comprising" and variations thereof means open inclusive, i.e., "including but not limited to". Unless specifically stated, the term "or" means "and / or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

As described above, in a conventional power distribution cabinet, in order to realize inter-phase isolation between busbars, it is necessary to rely on specifically developed insulating components, such as insulating grids with a certain specification and model. These insulating components are independently installed or installed in the power distribution cabinet by adopting an additional support structure, so that the application flexibility is poor, and there are problems such as large occupation space, high cost, and complex assembly.

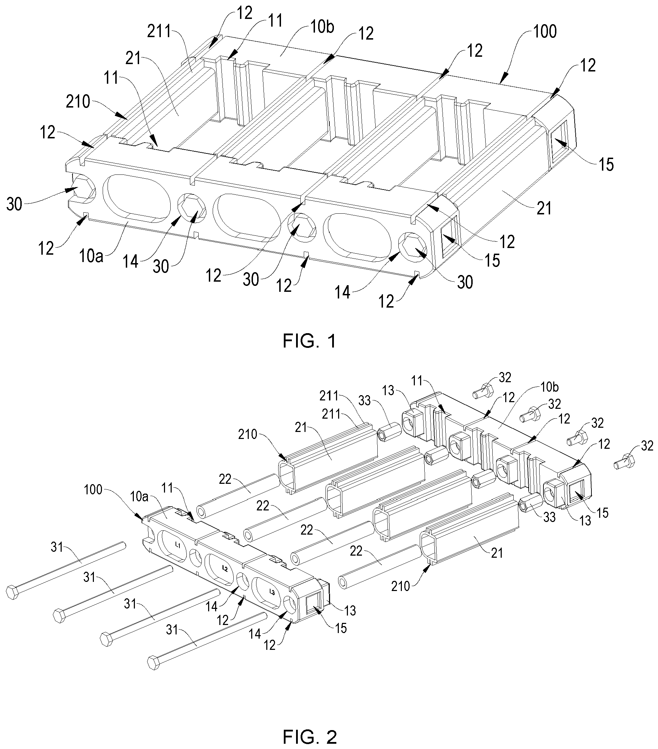

Embodiments of the present disclosure provide a busbar support apparatus and a power distribution cabinet. The busbar support apparatus includes a first support member, a second support member, a plurality of outer insulating sleeves, and a plurality of connecting assemblies. The first support member and the second support member are spaced apart from each other. The adjacent sides of the first support member and the second support member are respectively provided with a plurality of first grooves. The top and bottom of the first support member and the second support member are respectively provided with a plurality of second grooves. The plurality of first grooves are respectively configured to fix a plurality of busbars between the first support member and the second support member. The plurality of second grooves are respectively configured to fix a plurality of inter-phase insulating separator plates between the busbar support apparatus and another busbar support apparatus. The plurality of outer insulating sleeves are arranged between the first support member and the second support member and respectively correspond to the plurality of second grooves. The plurality of connecting assemblies respectively penetrate through the plurality of outer insulating sleeves and are coupled to the first support member and the second support member. With this arrangement, the busbar support apparatus not only can fix the plurality of busbars, but also can fix the plurality of inter-phase insulating separator plates. During use, without relying on specially developed insulating components, the inter-phase isolation function may be realized on the busbar support apparatus, so that the cost is controlled, the installation convenience is improved, and the space in the cabinet may be saved. The principles of the present disclosure will be described in detail below with reference to FIGS. 1 to 5.

As shown in FIGS. 1 and 2, the busbar support apparatus 100 includes a first support member 10a, a second support member 10b, a plurality of outer insulating sleeves 21, and a plurality of connecting assemblies 30. A certain spacing is maintained between the first support member 10a and the second support member 10b, so as to provide a basis for the installation of other assemblies. The adjacent sides of the first support member 10a and the second support member 10b are respectively provided with a plurality of first grooves 11. A plurality of busbars 220 may be respectively inserted into the plurality of first grooves 11 of the first support member 10a and the second support member 10b, thereby fixing the plurality of busbars 220 between the first support member 10a and the second support member 10b. In this way, the busbars 220 will not move during use, thereby ensuring reliability and safety of power transmission.

As an example, the plurality of first grooves 11 may be rectangular grooves. With this arrangement, a plurality of rectangular busbars 220 may be arranged between the first support member 10a and the second support member 10b, and the plurality of rectangular busbars 220 are respectively inserted into the plurality of rectangular grooves.

As another example, the plurality of first grooves 11 may be irregular-shaped grooves. With this arrangement, a plurality of irregular busbars, such as K type busbars, may be arranged between the first support member 10a and the second support member 10b, and the plurality of irregular bus bars 220 are respectively inserted into the plurality of irregular grooves.

As yet another example, the shape of the plurality of first grooves 11 integrates features of both rectangular grooves and irregular grooves, for example, the first grooves 11 include both rectangular regions and irregular regions. In this way, not only the rectangular busbars 220 may be arranged between the first support member 10a and the second support member 10b, but also other busbars 220 with irregular shapes may be arranged between the first support member 10a and the second support member 10b, thereby improving the compatibility of the busbar support apparatus 100.

As shown in FIGS. 1 and 2, the top and bottom of the first support member 10a and the second support member 10b are respectively provided with a plurality of second grooves 12. The plurality of second grooves 12 are respectively configured to fix inter-phase insulating separator plates 230. The inter-phase insulating separator plates 230 are separator plates made of an insulating material, which may be installed between adjacent busbars 220 or on both sides of the busbars 220, thereby enhancing the insulating performance between adjacent busbars 220 and enhancing the insulating performance between the busbars 220 at an edge position and an cabinet body 240 of the power distribution cabinet 200. By fixing a plurality of inter-phase insulating separator plates 230 in the plurality of second grooves 12, electrical short circuit or other safety accidents caused by too close distances between the busbars 220 may be prevented.

As shown in FIGS. 1 to 3, a plurality of outer insulating sleeves 21 are arranged between the first support member 10a and the second support member 10b and respectively correspond to the plurality of second grooves 12. A plurality of connecting assemblies 30 respectively penetrate through the plurality of outer insulating sleeves 21, and two ends of each connecting assembly 30 are respectively coupled to the first support member 10a and the second support member 10b to form a stable connecting structure. In this way, the outer insulating sleeve 21 can provide insulation protection for the connecting assembly 30, ensuring that no electrical short circuit or electric leakage occurs at the connecting assembly 30. In addition, the top of the first support member 10a and the second support member 10b are provided with the inter-phase insulating separator plates 230, and the bottom of the first support member 10a and the second support member 10b are also provided with inter-phase insulating separator plates 230, and a region between the two inter-phase insulating separator plates 230 is closed by the outer insulating sleeve 21. Therefore, an insulating layer is arranged between two adjacent busbars 220 along the entire height direction, thereby improving electrical safety between the busbars 220.

With this arrangement, the busbar support apparatus 100 not only can fix the plurality of busbars 220, but also can fix the plurality of inter-phase insulating separator plates 230. During use, without relying on specially developed insulating components, the inter-phase isolation function may be realized on a universal busbar support apparatus by upgrading the busbar system structure and the assembly, so that the cost is controlled, the installation convenience is improved, and the space in the cabinet may be saved.

In some embodiments, as shown in FIGS. 1 to 3, the top and the bottom of each outer insulating sleeve 21 are respectively provided with a third groove 210. The third groove 210 corresponds to the second grooves 12 on the first support member 10a and the second support member 10b. Specifically, the third groove 210 at the top of the outer insulating sleeve 21 corresponds to the respective second grooves 12 at the top of the first support member 10a and the second support member 10b, thereby forming a continuous groove at the top of the first support member 10a, the outer insulating sleeve 21 and the second support member 10b. In addition, the third groove 210 at the bottom of the outer insulating sleeve 21 corresponds to the respective second grooves 12 at the bottom of the first support member 10a and the second support member 10b, so that another continuous groove is formed at the bottom of the first support member 10a, the outer insulating sleeve 21 and the second support member 10b.

In this way, after the busbars 220 and the busbar support apparatus 100 are fixed in the power distribution cabinet 200, each of the inter-phase insulating separator plates 230 may be detachably inserted into and fixed in these grooves on the front side or the rear side of the power distribution cabinet 200. The inter-phase insulating separator plates 230 may be inserted into the respective second groove 12 and third groove 210 in a detachable manner, thereby improving the assembling efficiency of an operator. In addition, the inter-phase insulating separator plates 230 may be firmly fixed between the outer insulating sleeve 21 and the respective support member, and a continuous insulating layer may be formed between the busbars 220, thereby enhancing the electrical insulating performance between adjacent busbars 220.

In some embodiments, as shown in FIGS. 1 and 2, the top and bottom of each outer insulating sleeve 21 are respectively provided with two ribs 211. The two ribs 211 are spaced apart from each other, and the ribs 211 can form the third groove 210 between them. In this way, the inter-phase insulating separator plates 230 may be inserted and fixed between the two ribs 211. In addition, at the contact position between the inter-phase insulating separator plate 230 and the outer insulating sleeve 21, insulating structures partially overlap to ensure the continuity, thereby enhancing the electrical insulating performance between adjacent busbars 220.

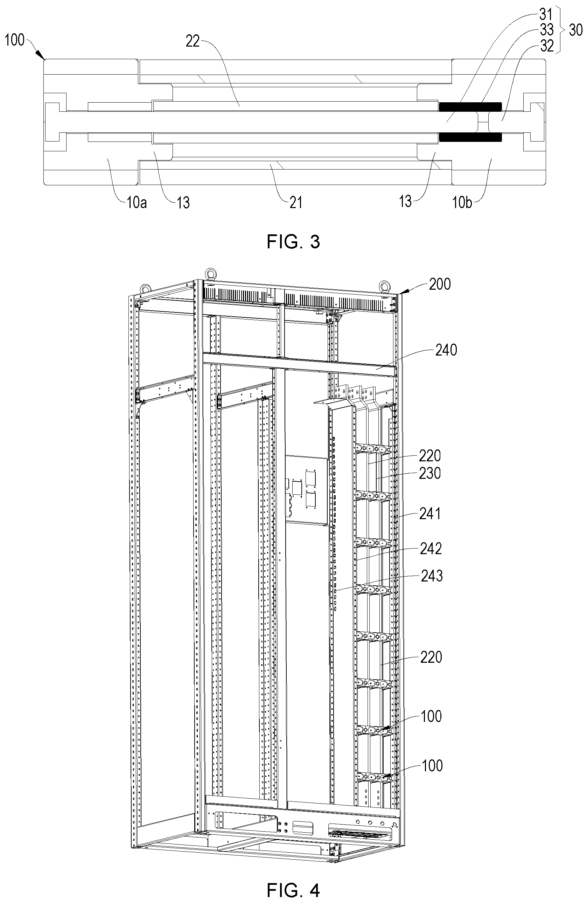

In some embodiments, as shown in FIGS. 2 and 3, the adjacent sides of the first support member 10a and the second support member 10b are respectively provided with a plurality of limiting seats 13, and each limiting seat 13 is inserted into the respective outer insulating sleeve 21. With this arrangement, each limiting seat 13 can limit the movement of the respective outer insulating sleeve 21 and prevents the respective outer insulating sleeve 21 from being deflected or loosened when subjected to external force or vibration, thereby increasing the structural stability of the busbar support apparatus 100.

In some embodiments, as shown in FIGS. 2 and 3, each limiting seat 13 further includes an anti-misassembly structure, for example, a corner structure or an arc structure is arranged on an outer side wall of the limiting seat 13. When the limiting seat 13 is inserted into the outer insulating sleeve 21, the mating angle between the limiting seat 13 and the outer insulating sleeve 21 is unique. When mounted at this angle, the second groove 12 may correspond to the third groove 210. In this way, the installation efficiency of the operator may be improved, and the structural stability of the busbar support apparatus 100 may be improved.

In some embodiments, as shown in FIGS. 2 and 3, the busbar support apparatus 100 further includes a plurality of inner insulating sleeves 22. The plurality of inner insulating sleeves 22 are respectively arranged within the plurality of outer insulating sleeves 21 and surround the plurality of connecting assemblies 30. In this way, the inner insulating sleeves 22 may further increase the insulating performance between the connecting assemblies 30 and the busbars 220. When the busbars 220 have an irregular shape, the distance between the busbars 220 and the connecting assemblies 30 is relatively close, and this close distance may easily cause an electrical safety hazard. In this case, it is necessary to provide the inner insulating sleeves 22 so as to provide an additional insulating layer, which can effectively prevent electrical short circuit or electric leakage caused by too close distance.

In other embodiments, the inner insulating sleeves 22 may also be arranged according to actual needs to further improve the electrical safety and reliability of the apparatus. With this arrangement, through the multilayer insulating layer, the busbar support apparatus 100 not only can stably operate in various complex electrical environments, but also can adapt to busbars 220 of different shapes and sizes, which can expand the application range and flexibility of the busbar support apparatus 100, and at the same time avoid the problems such as large space occupation, high usage cost, and complex installation.

In some embodiments, as shown in FIGS. 1 to 3, the first support member 10a and the second support member 10b are respectively provided with a plurality of through holes 14. Each connecting assembly 30 includes a first screw member 31, a second screw member 32, and a double-ended threaded sleeve 33. In this way, the first support member 10a and the second support member 10b may be secured together by the first screw member 31, the second screw member 32, and the double-ended threaded sleeve 33.

In one embodiment, the first screw member 31 penetrates through the respective through hole 14 of the first support member 10a and is inserted into the respective outer insulating sleeve 21. The second screw member 32 penetrates through the respective through hole 14 of the second support member 10b. The double-ended threaded sleeve 33 is arranged within the respective through hole 14 of the second support member 10b and is detachably coupled to the respective first screw member 31 and second screw member 32. In this case, the length of the first screw 31 is greater than the length of the second screw 32. In this way, the first screw member 31 can penetrate through the outer insulating sleeve 21 from one side of the first support member 10a, enter the double-ended threaded sleeve 33 on one side of the second support member 10b, and be connected to the second screw member 32 through the double-ended threaded sleeve 33. When other structures on the rear side of the power distribution cabinet 200 hinder installation, the connecting assembly 30 may be installed from the front side, which improves the convenience and flexibility of installation.

In another embodiment, the first screw member 31 penetrates through the respective through hole 14 of the second support member 10b and is inserted into the respective outer insulating sleeve 21. The second screw member 32 penetrates through the respective through hole 14 of the first support member 10a. The double-ended threaded sleeve 33 is arranged within the respective through hole 14 of the first support member 10a and is detachably coupled to the respective first screw member 31 and second screw member 32. In this case, the length of the first screw 31 is greater than the length of the second screw 32. In this way, when other structures on the front side of the power distribution cabinet 200 hinder installation, the connecting assembly 30 may be installed from the rear side, which also improves the convenience and flexibility of installation.

In another embodiment, the connecting assembly 30 may include a first screw member 31. The first screw member 31 penetrates through the respective through hole 14 of the first support member 10a and the respective through hole 14 of the second support member 10b, so as to achieve a firm connection between the first support member 10a and the second support member 10b.

In another embodiment, the connecting assembly 30 may include a second screw member 32. The second screw member 32 penetrates through the respective through hole 14 of the first support member 10a and the respective through hole 14 of the second support member 10b, thereby achieving a firm connection between the first support member 10a and the second support member 10b.

It should be understood that when there is a shielding structure at the mounting position of the busbar support apparatus 100, since the length of the first screw member 31 is large, the first screw member 31 can penetrate through the shielding structure and then be inserted into the respective support member. Alternatively, the first screw member 31 and the second screw member 32 may be respectively sunk into the respective through hole 14 of the first support member 10a and the respective through hole 14 of the second support member 10b, thereby avoiding the influence of shielding at the mounting position of the busbar support apparatus 100.

Through the above embodiments, the operator can select an appropriate installation mode according to actual conditions, thereby avoiding installation difficulty caused by space limitation.

In some embodiments, as shown in FIGS. 1 and 2, the opposite ends of the first support member 10a and the second support member 10b are provided with connecting portions 15 for fixing the busbar support apparatus 100 to the power distribution cabinet 200. Specifically, the connecting portions 15 may include some standardized interfaces or fixing points, such as bolt holes, buckles, clamping grooves, limiting protrusions, etc. The connecting portions 15 may be matched with corresponding fixing points on the power distribution cabinet 200, and the busbar support apparatus 100 is fixed on the power distribution cabinet 200 through bolts, nuts or other fasteners. In this way, the busbar support apparatus 100 may be conveniently disassembled and maintained, thereby improving maintainability and flexibility of the apparatus.

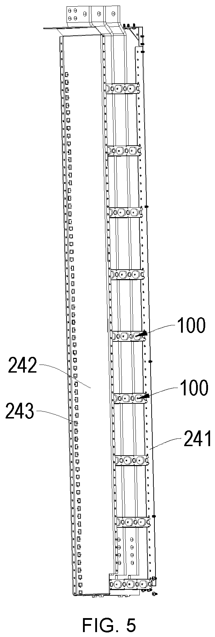

The second aspect of the present disclosure provides a power distribution cabinet 200. As shown in FIGS. 4 and 5, the power distribution cabinet 200 includes a cabinet body 240, a plurality of busbars 220, a plurality of groups of inter-phase insulating separator plates 230, and a plurality of busbar support apparatus 100 described herein.

As shown in FIGS. 4 and 5, the plurality of busbar support apparatus 100 are installed in the cabinet body 240. Each busbar support apparatus 100 includes a first support member 10a and a second support member 10b, and a certain spacing is kept between the first support member 10a and the second support member 10b. The adjacent sides of the first support member 10a and the second support member 10b are respectively provided with a plurality of first grooves 11. The plurality of busbars 220 are respectively inserted into the plurality of first grooves 11 of the first support member 10a and the second support member 10b. In addition, each group of inter-phase insulating separator plates 230 includes a plurality of inter-phase insulating separator plates 230. Each group of inter-phase insulating separator plates 230 is detachably coupled to the plurality of second grooves 12 on two adjacent busbar support apparatus 100.

In this way, the plurality of busbar support apparatus 100 form a stable support structure in the cabinet body 240, which not only can fix the busbars 220, but also can isolate each busbar 220 through the inter-phase insulating separator plates 230. During use, without relying on a specially developed insulating components, the inter-phase isolation function may be realized on a universal busbar support apparatus by upgrading the busbar system structure and the components, so that the cost is controlled, the installation convenience is improved, and the space in the cabinet may be saved.

In some embodiments, when the bus bars 220 are arranged, since the space occupied by the inter-phase insulating separator plate 230 is small, the physical spacing between the bus bars 220 may be reduced, thereby saving the space in the power distribution cabinet 200. In addition, even if facing the busbars 220 with an irregular shape, the inter-phase insulating separator plate 230 can still maintain a necessary electrical safety standard without increasing the distance between the busbars 220, thereby increasing the application range of the busbar support apparatus 100.

In addition, in the power distribution cabinet 200, a plurality of support schemes may be formed through different combinations, so that the power distribution cabinet 200 is applied to different scenarios, which is beneficial to accurately controlling costs and improving installation convenience.

In some embodiments, as shown in FIGS. 4 and 5, the cabinet body 240 includes a first side support member 241 and a second side support member 242. The first side support member 241 and the second side support member 242 are arranged in parallel on both sides of the plurality of busbar support apparatus 100, and are detachably coupled to the plurality of busbar support apparatus 100. With this arrangement, the first side support member 241 and the second side support member 242 are detachably connected to the plurality of busbar support apparatus 100. When the busbar support apparatus 100 needs to be adjusted or replaced, the busbar support apparatus 100 may be quickly disassembled and reinstalled, thereby improving working efficiency and flexibility.

In some embodiments, as shown in FIGS. 4 and 5, the first side support member 241 and the second side support member 242 are provided with a plurality of mating portions 243. The plurality of mating portions 243 may be detachably coupled to the connecting portions 15 of the first support member 10a and the second support member 10b of the plurality of busbar support apparatus 100.

Specifically, the connecting portion 15 of each busbar support apparatus 100 may be flexibly fixed to any one of the plurality of mating portions 243, so as to install the busbar support apparatus 100 in the cabinet body 240. In addition, the number of the plurality of mating portions 243 is greater than the number of the plurality of busbar support apparatus 100. Thus, each busbar support apparatus 100 has a plurality of optional mounting locations. In this way, the arrangement height and spacing of the plurality of busbar support apparatus 100 between the first side support member 241 and the second side support member 242 may be flexibly adjusted to meet different electrical configuration requirements and spatial layout requirements.

In some embodiments, the plurality of mating portions 243 are arranged at equal spacing. In this way, the plurality of busbar support apparatus 100 may be uniformly distributed in the entire cabinet body 240, ensuring that the spacing between two adjacent busbar support apparatus 100 is consistent.

In other embodiments, the spacing between the plurality of mating portions 243 may be different. In this case, the spacing between the plurality of mating portions 243 still needs to meet certain safety specifications. In this way, the non-equally spaced arrangement can avoid other structures in the power distribution cabinet 200, and can provide greater flexibility and adaptability.

In some embodiments, as shown in FIGS. 4 and 5, the connecting portions 15 may be a limiting groove, and the mating portion 243 is a limiting protrusion. In this way, the limiting protrusion may be inserted into the limiting groove, so that the busbar support apparatus 100 is detachably connected to the first side support member 241 and the second side support member 242.

In other embodiments, the mating portion 243 may be a limiting groove, and the connecting portions 15 is a limiting protrusion. In this way, the limiting protrusion may be inserted into the limiting groove to achieve the same coupling function.

It should be understood that the first support member 10a and the second support member 10b may also be provided with a limiting groove and a limiting protrusion at the same time, for example, one side of the first support member 10a and one side of the second support member 10b may be provided with a limiting groove, and the other side may be provided with a limiting protrusion. In this way, the first support member 10a and the second support member 10b may be mounted on the first side support member 241 and the second side support member 242 in different ways.

In some embodiments, as shown in FIGS. 4 and 5, the mating portion 243 is a structure formed by stamping and bending from the first side support member 241 and the second side support member 242. Through the stamping and bending process, the required mating portion 243, such as the limiting protrusion or the limiting groove, may be directly formed on the first side support member 241 and the second side support member 242 without additional parts or complicated assembly steps. In this way, not only the production cost may be reduced, but also the assembling efficiency and reliability may be improved.

Embodiments of the present disclosure have been described above, and the above description is exemplary, not exhaustive, and is not limited to the disclosed embodiments. Many modifications and variations will be apparent to those of ordinary skill in the art without departing from the scope and spirit of the illustrated embodiments. The selection of terms as used herein is intended to best explain the principles of the embodiments, the practical application or technical improvements to the market, or to enable others of ordinary skill in the art to understand the embodiments disclosed herein.

## Claims

1. A busbar support apparatus (100), **characterized by** comprising:
a first support member (10a) and a second support member (10b) spaced apart from each other, wherein the adjacent sides of the first support member (10a) and the second support member (10b) are respectively provided with a plurality of first grooves (11), and the top and bottom of the first support member (10a) and the second support member (10b) are respectively provided with a plurality of second grooves (12), wherein the plurality of first grooves (11) are respectively configured to fix a plurality of busbars (220) between the first support member (10a) and the second support member (10b), and the plurality of second grooves (12) are respectively configured to fix a plurality of inter-phase insulating separator plates (230) between the busbar support apparatus (100) and another busbar support apparatus (100);
a plurality of outer insulating sleeves (21) arranged between the first support member (10a) and the second support member (10b) and respectively corresponding to the plurality of second grooves (12); and
a plurality of connecting assemblies (30) respectively penetrating through the plurality of outer insulating sleeves (21) and coupled to the first support member (10a) and the second support member (10b).

2. The busbar support apparatus (100) according to claim 1, **characterized in that** the top and the bottom of each outer insulating sleeve (21) are respectively provided with a third groove (210), and the third groove (210) at the top of the outer insulating sleeve (21) corresponds to the respective second grooves (12) at the top of the first support member (10a) and the second support member (10b), and the third groove (210) at the bottom of the outer insulating sleeve (21) corresponds to the respective second grooves (12) at the bottom of the first support member (10a) and the second support member (10b), so that each of the inter-phase insulating separator plates (230) is detachably inserted into the respective second grooves (12) and the respective third groove (210).

3. The busbar support apparatus (100) according to claim 2, **characterized in that** the top and the bottom of each outer insulating sleeve (21) are respectively provided with two ribs (211) spaced apart to form the third groove (210).

4. The busbar support apparatus (100) according to any of claims 1 to 3, **characterized in that** the adjacent sides of the first support member (10a) and the second support member (10b) are respectively provided with a plurality of limiting seats (13), and the plurality of limiting seats (13) are respectively inserted into the plurality of outer insulating sleeves (21) to limit the outer insulating sleeves (21).

5. The busbar support apparatus (100) according to any of claims 1 to 3, **characterized by** further comprising:
a plurality of inner insulating sleeves (22) respectively arranged within the plurality of outer insulating sleeves (21) and respectively surrounding the plurality of connecting assemblies (30).

6. The busbar support apparatus (100) according to any of claims 1 to 3, **characterized in that** the first support member (10a) and the second support member (10b) are respectively provided with a plurality of through holes (14), and each connecting assembly (30) comprises:
a first screw member (31) penetrating through the respective through hole (14) of one of the first support member (10a) and the second support member (10b) and inserted into the respective outer insulating sleeve (21);
a second screw member (32) penetrating through the respective through hole (14) of the other one of the first support member (10a) and the second support member (10b); and
a double-ended threaded sleeve (33) arranged in the through hole (14) corresponding to the second screw member (32) and detachably coupled to the respective first screw member (31) and the respective second screw member (32), wherein the length of the first screw member (31) is greater than the length of the second screw member (32).

7. The busbar support apparatus (100) according to any of claims 1 to 3, **characterized in that** the opposite ends of the first support member (10a) and the second support member (10b) are provided with connecting portions (15) for fixing the busbar support apparatus (100) to a power distribution cabinet (200).

8. A power distribution cabinet (200), **characterized by** comprising:
a cabinet body (240);
a plurality of busbar support apparatus (100) according to any of claims 1 to 7, mounted within the cabinet body (240);
a plurality of busbars (220) respectively inserted into the plurality of first grooves (11) of the first support member (10a) and the second support member (10b); and
a plurality of groups of inter-phase insulating separator plates (230), each group of inter-phase insulating separator plates (230) comprising a plurality of inter-phase insulating separator plates (230), and each group of inter-phase insulating separator plates (230) being detachably coupled to the plurality of second grooves (12) on two adjacent busbar support apparatus (100).

9. The power distribution cabinet (200) according to claim 8, **characterized in that** the cabinet body (240) comprises:
a first side support member (241) and a second side support member (242) arranged in parallel on both sides of the plurality of busbar support apparatus (100) and detachably coupled to the plurality of busbar support apparatus (100).

10. The power distribution cabinet (200) according to claim 9, **characterized in that** the first side support member (241) and the second side support member (242) are provided with a plurality of mating portions (243), connecting portions (15) of the first support member (10a) and the second support member (10b) of the plurality of busbar support apparatus (100) are detachably coupled to the plurality of mating portions (243), and the number of the plurality of mating portions (243) is greater than the number of the plurality of busbar support apparatus (100).

11. The power distribution cabinet (200) according to claim 10, **characterized in that** one of the connecting portion (15) and the mating portion (243) is a limiting groove, and the other one of the connecting portion (15) and the mating portion (243) is a limiting protrusion inserted into the limiting groove.

12. The power distribution cabinet (200) according to claim 11, **characterized in that** the mating portion (243) is a structure formed by stamping and bending from the first side support member (241) and the second side support member (242).
